Europäisches Patentamt

European Patent Office

Office européen des brevets

(11) Publication number: **0 367 165**
**A1**

## EUROPEAN PATENT APPLICATION

(21) Application number: **89120060.2**

(22) Date of filing: **28.10.89**

(51) Int. Cl.⁵ **C09K 3/10 , C09J 109/00 , C08L 53/00**

(30) Priority: **02.11.88 US 266469**

(43) Date of publication of application:
**09.05.90 Bulletin 90/19**

(84) Designated Contracting States:
**BE DE FR GB IT**

(71) Applicant: **HERCULES INCORPORATED**
**Hercules Plaza**
**Wilmington Delaware 19894(US)**

(72) Inventor: **Chu, Sung Gun**
**8 Liveoak Southwood**
**Hockessin Delaware 19707(US)**

(74) Representative: **von Kreisler, Alek et al**
**Patentanwälte Von**
**Kreisler-Selting-Werner-Schönwald-Fues-Da-**
**llmeyer Deichmannhaus**
**D-5000 Köln 1(DE)**

(54) **Cross-linkable hot melt sealant.**

㊄ Disclosed is a cross-linkable hot melt sealant composition comprising (1) 20%-40% of a thermoplastic elastomer block copolymer, (2) 40%-60% of a hydrogenated hydrocarbon tackifying resin, (3) 10%-30% of an aromatic hydrocarbon resin, (4) 10%-20% of an unsaturated acid anhydride-modified polymer and (5) 1%-3% of a difunctional amine cross-linking agent.

EP 0 367 165 A1

# CROSS-LINKABLE HOT MELT SEALANT

This invention relates to a hot melt sealant composition.

Currently available sealants include thermosetting polyurethane, polysulfide and silicone sealants, as well as butyl and other thermoplastic sealants that can be applied as a hot melt. For example, a thermoplastic sealant comprising a selectively hydrogenated block copolymer, a multi-block copolymer, a tackifying resin, a silane coupling agent and, optionally, a plasticizer is described in U.S. 4,296,008 (St. Clair et al.). U.S. 4,101,484 (Doss) describes a sealant comprising a thermoplastic elastomer, a poly-(vinylaromatic)-compatible modifying resin, a poly(conjugated diene)-compatible modifying resin and a filler. In "Sealants Based on Thermoplastic Elastomers" (TAPPI Proceedings: Polymers, Laminations and Coatings Conference, 1986: p. 537), S. G. Chu describes a sealant comprising a thermoplastic elastomer, a tackifying resin, a high softening point aromatic resin, and, optionally, other ingredients such as UV stabilizers and an aminosilane adhesion promoter. In "The Use of KRATON® G Thermoplastic Rubbers to Formulate Clear Sealants", presented at a meeting of the Adhesive and Sealant Council in Chicago, Illinois in October 1982, G. Holden describes a clear sealant comprising a thermoplastic elastomer block copolymer, a resin compatible with the midblock of the block copolymer, a resin compatible with the end block of the block copolymer and a coupling agent such as a vinylsilane, epoxysilane, aminosilane or a mercaptosilane. Most of the thermosetting sealants are cured by moisture or acid and their curing reaction is slow. Butyl and other thermoplastic sealants set faster than the thermosetting sealants and can be applied by hot melt processing, but the mechanical properties and long term stability are not adequate for a high quality product.

A new hot melt sealant that exhibits both improved melt processability as well as improved adhesion to glass in harsh environments and improved creep resistance at high temperatures would be desirable.

It has now been found that a cross-linkable sealant composition comprising (1) 20% to 40% of a thermoplastic elastomer block copolymer, (2) 40% to 60% of a hydrogenated hydrocarbon tackifying resin, (3) 10% to 30% of an aromatic hydrocarbon resin, (4) 10% to 20% of an unsaturated acid anhydride-modified polymer, and (5) 1% to 3% of a difunctional amine cross-linking agent, all percentages being by weight based on the total weight of the composition, has the proper melt viscosity for extrusion from a hot melt gun, good UV stability, good tack, high temperature creep resisance and good adhesion to glass, aluminum and other substrates.

The thermoplastic elastomer used as component (1) in the composition of this invention is stable to ultraviolet radiation and is a saturated block copolymer having vinyl aromatic polymer end blocks and an elastomeric midblock. Such block copolymers are available commercially, e.g., KRATON® G thermoplastic elastomers supplied by Shell Chemical Company. KRATON® G is a (styrene-ethylene)/(butylene-styrene) block copolymer obtained by hydrogenation of styrene-butadiene-styrene precursors. The block copolymer is present in an amount of 20% to 40% by weight, based on the total weight of the composition.

The block copolymer component (1) by itself does not provide sufficient adhesion of the composition to the substrate. Therefore it is necessary to add a tackifying resin that is compatible with the elastomeric midblock of the block copolymer. The tackifying resin used as component (2) of the composition of this invention can be any hydrogenated hydrocarbon resin having a Ring and Ball (R & B) softening point of 10°C to 120°C. Such resins are available commercially and include, for example, REGALREZ® hydrocarbon resin (Hercules Incorporated), ESCOREZ hydrogenated cyclopentadiene (Exxon), ARKON P hydrogenated C-9 oligomers (Arakawa), and REGALITE® 355 hydrocarbon resin (Hercules Incorporated). The tackifying resin is present in an amount of 40% to 60% by weight, based on the total weight of the composition.

An aromatic resin (component 3) that is compatible with the vinyl aromatic end blocks of the block copolymer is added to the composition to increase high temperature performance. The aromatic resin typically has a Ring and Ball softening point of 140°C to 170°C. The resin can be a polymer of, for example, alpha-methylstyrene, para-methylstyrene, styrene, vinyltoluen or mixtures thereof. Such products are available commercially and include, for example, ENDEX® 160 synthetic resin (Hercules Incorporated) and KRISTALEX® 5140 synthetic resin (Hercules Incorporated). The aromatic resin is present in an amount of 10% to 30% by weight, based on the total weight of the composition.

The unsaturated acid anhydride-modified polymer (component 4) is added to the composition to increase adhesion of the composition to substrates such as glass and aluminum without destroying the high temperature creep resistance. Such products are available commercially and include, for example, HERCOPRIME® A synthetic resin (Hercules Incorporated) and KRATON® G 1900X thermoplastic rubber (Shell Chemical Company). The modified polymer is present in an amount of 10% to 20% by weight, based on the total weight of the composition.

The difunctional amine cross-linking agent (component 5) for the unsaturated acid anhydride-modified polymer is present in the composition of this invention in an amount of 1% to 3% by weight, based on the total weight of the composition. The amine cross-linking agent can be an aromatic sulfone diamine such as diaminodiphenylsulfone. Other suitable difunctional amines include, but are not limited to, N-2-aminoethyl-3-aminopropyltrimethoxysilane; methylene dianilines such as 4,4'-methylenedianiline; and aromatic diamines such as diaminodiphenyl ether, benzidine, 4-4'-thiodianiline, 4-methoxy-6-m-phenylenediamine, 2,6-diaminopyridine, 2,4-toluenediamine and dianisidine. Alkyl diamines such as 2,5-dimethyl-2,5-hexanediamine, neopentanediamine and dimethylaminopropylamine, as well as alicyclic amines such as dimethylcyclohexyldiamine and menthanediamine can also be used.

Additional components such as antioxidants, fillers, pigments, additional resins and elastomers, and UV stabilizers can also be present in the composition.

The hot melt sealants of this invention have a high melt viscosity at low shear rates to prevent creeping or slumping, as well as a low melt viscosity at high shear rates so that the composition can be extruded from a hot melt gun. The hot melt is typically applied to one of the surfaces to be bonded at a temperature of about 300-350°F (149-177°C). The other surface is brought in contact with the hot sealant for a time sufficient for the melt to cool and cross-link, producing a strong and durable bond. The mode of failure of the sealant is cohesive rather than adhesive, i.e., the sealant itself fails rather than the bond between the sealant and the substrate.

The cross-linkable sealants will adhere to a wide variety of substrates such as glass, aluminum, steel, bathroom tile and cement blocks. The sealants set quickly and can be used in a wide variety of applications, including those in the automobile and mobile home industries.

## Example 1

This example illustrates the effects of the addition of polypropylene, maleic anhydride-modified polypropylene and an aminosilane cross-linking agent on the high temperature creep resistance of the sealant and the adhesion of the sealant to glass.

To prepare formulation A, 30 parts KRATON® G 1650 thermoplastic rubber (Shell Chemical Co.), 70 parts KRATON® GX 1726 synthetic rubber (Shell Chemical Co.), 50 parts ENDEX® 160 synthetic resin (Hercules Incorporated), 50 parts REGALREZ® 1018 hydrocarbon resin (Hercules Incorporated), 4 parts IRGANOX® 1010 (Ciba-Geigy), 4 parts TINUVIN® 770 (Ciba-Geigy) and 2 parts TINUVIN® P are placed in a one quart sigma blade mixer heated to 170°C under a nitrogen blanket. ENDEX® 160 synthetic resin has a typical ring and ball (R & B) softening point of 159°C. REGALREZ® 1018 hydrocarbon resin has a typical softening point of 18°C. IRGANOX® 1010 is an anti-oxidant and TINUVIN® is a UV stabilizer.

The remaining 200 parts of REGALREZ® 1018 hydrocarbon resin are slowly added when the above mixture is homogeneous. Addition of the tackifying resin too rapidly makes it difficult to achieve a homogeneous blend.

Formulations B, C and D are prepared in a similar manner except that 50 parts PROFAX® 6501 polypropylene (HIMONT® Incorporated) and HERCOPRIME® A maleic anhydride-modified polypropylene (Hercules Incorporated) are added before the last 200 parts of the REGALREZ® hydrocarbon resin are added. The N-2-aminoethyl-3-aminopropyltrimethoxysilane, referred to in the tables as aminosilane, is added last after the sample has been cooled to around 130°C -140°C to avoid boiling off.

For the 180° peel test, glass plates are prepared by coating approximately 1/8 inch (0.3 cm) of molten sample onto a 1/4 inch x 6 inch by 3 inch (0.6 cm X 15.2 cm X 7.6 cm) clean glass plate. The blend is applied using a "LITTLE SQUIRT" hot melt adhesive handgun applicator system (Slautterback Corp.) at an application temperature of 175°C. The molten sample is then covered by two 1 inch x 10 inch (2.54 cm X 25.4 cm) canvas strips. Using 1/16 (0.16 cm) inch shims, the sample is covered with release paper and rolled with a hardwood rolling pin to give a 1/16 inch (0.16 cm) adhesive layer beneath the canvas strip. The release paper is removed once the sample is cooled and excess adhesive is trimmed off to give a 1 inch (2.54 cm) wide adhesive/canvas strip. The test sample is aged 24 hours at 23°C and 50% humidity and then peeled at a 180° angle at the rate of 2 inches (5.1 cm) per minute on an Instron Tensile Tester.

A Rheometrics dynamic spectrometer is used to measure the melt viscosity of the sealants.

The results of the tests are given in Table 1.

3

TABLE 1

| | A | B | C | D |
|---|---|---|---|---|
| KRATON® G 1650 | 30 | 30 | 30 | 30 |
| KRATON® GX 1726 | 70 | 70 | 70 | 70 |
| REGALREZ® 1018 | 250 | 250 | 250 | 250 |
| ENDEX® 160 | 50 | 50 | 50 | 50 |
| Polypropylene | - | 50 | - | - |
| HERCOPRIME® A | - | - | 50 | - |
| TINUVIN® P | 2 | 2 | 2 | 2 |
| TINUVIN® 770 | 4 | 4 | 4 | 4 |
| IRGANOX® 1010 | 4 | 4 | 4 | 4 |
| Aminosilane | - | - | - | 2.5 |
| Peel (kg cm) | 5.34 | 0.89 | 8.9 | 5.16 |
| Viscosity at 177°C; poise | | | | |
| = 0.1 rad sec | 23 | 420 | 320 | 260 |
| = 100 rad sec | 23 | 180 | 65 | 21 |

## Example 2

This example demonstrates the effects of cross-linking on melt viscosity, modulus and adhesion of the sealant to glass. Formulation A contains only the unsaturated anhydride-modified polymer without the amine cross-linking agent. Formulation B contains the amine cross-linking agent but not the unsaturated anhydride-modified polymer. REGALREZ® 1078 hydrocarbon resin has a typical R & B softening point of 78°C and KRISTALEX® 1120 resin has a typical R & B softening point of 120°C.

Formulations A and B are prepared according to the method described in Example 1 using the formulations shown in Table 2. Formulation C is made by mixing equal amounts of formulations A and B in a Sigma mixer heated to 170°C. Mixing is continued only long enough to give a smooth, homogeneous formulation. Cross-linking occurs only with formulation C.

The 180° peel test is carried out as described in Example 1. Melt viscosity and modulus data are obtained with a Rheometrics dynamic spectrometer. The results of the tests are given in Table 2.

TABLE 2

|  | A | B | C |
|---|---|---|---|
| KRATON® G 1652 | 35 | 35 | A & B |
| KRATON® GX 1726 | 15 | 15 | |
| REGALREZ® 1078 | 83.5 | 83.5 | |
| KRISTALEX® 1120 | 33.5 | 33.5 | |
| HERCOPRIME® A | 33.4 | - | |
| IRGANOX® 1010 | 0.5 | 0.5 | |
| TINUVIN® 770 | 0.5 | 0.5 | |
| TINUVIN® P | 0.25 | 0.25 | |
| Aminosilane | - | 7.35 | |
| Peel (kg.cm) | 7.12 | 1.78 | 8.9 |
| Failure mode | Adhesive | Adhesive | Cohesive |
| MELT VISCOSITY AT 177°C, POISE | | | |
| Frequency | | | |
| = 0.1 rad.sec | 900 | 100 | 9,000 |
| = 10 rad.sec | 600 | 85 | 700 |
| = 100 rad/sec | 350 | 65 | 370 |
| MODULUS (dyne/cm$^2$) | | | |
| Temperature | | | |
| 80°C | $3 \times 10^6$ | $10^6$ | $4 \times 10^6$ |
| 100°C | $2 \times 10^6$ | $3.2 \times 10^5$ | $2 \times 10^6$ |
| 120°C | $2.8 \times 10^5$ | $4 \times 10^4$ | $3.2 \times 10^5$ |
| 140°C | $4 \times 10^4$ | $2 \times 10^3$ | $3 \times 10^4$ |
| 160°C | $1.8 \times 10^4$ | $4 \times 10^2$ | $6.5 \times 10^3$ |

## Example 3

This example demonstrates the effects of the addition of an unsaturated acid anhydride-modified polymer and an amine cross-linking agent on the glass transition temperature, modulus and melt viscosity of a hot melt sealant formulation.

Formulations A, B and C are prepared according to the methods described in Example 1 using the formulations given in Table 3. EP 306 is an ethylene/propylene rubber supplied by Polysar Corporation.

Melt viscosity and modulus data as well as the glass transition temperature are obtained with a Rheometrics dynamic spectrometer. The results of the tests are given in Table 3.

TABLE 3

| | A | B | C |
|---|---|---|---|
| KRATON® GX 1726 | 70 | 70 | 70 |
| KRATON® G 1650 | 60 | 60 | 60 |
| EP 306 | 70 | 70 | 70 |
| REGALREZ® 1018 | 500 | 500 | 500 |
| ENDEX® 160 | 100 | 100 | 100 |
| HERCOPRIME® A | - | 100 | 100 |
| Aminosilane | - | - | 4.5 |
| Tg (°C). glass transition temperature | -13 | -13 | -13 |
| G' modulus (dyne cm$^{-2}$) | | | |
| G' at 0°C | $2 \times 10^7$ | $5 \times 10^7$ | $1.1 \times 10^8$ |
| 20°C | $8 \times 10^6$ | $1.3 \times 10^7$ | $3 \times 10^7$ |
| 60°C | $1 \times 10^6$ | $2.5 \times 10^6$ | $7 \times 10^6$ |
| 100°C | $1 \times 10^5$ | $1.5 \times 10^5$ | $1.8 \times 10^6$ |
| 120°C | $1 \times 10^4$ | $2.2 \times 10^4$ | $1.3 \times 10^5$ |
| 140°C | $3 \times 10^3$ | $8 \times 10^3$ | $2.3 \times 10^4$ |
| 160°C | $3 \times 10^2$ | $1.8 \times 10^3$ | $1.4 \times 10^4$ |
| Melt viscosity at 177°C (poise) | | | |
| Frequency | | | |
| = 0.1 rad.sec | 50 | 250 | $3.5 \times 10^4$ |
| = 1.0 rad.sec | 50 | 250 | $5.8 \times 10^3$ |
| = 10 rad.sec | 50 | 200 | $1.5 \times 10^3$ |
| = 100 rad./sec | 50 | 200 | $5 \times 10^2$ |

## Claims

1. A sealant composition composed of a thermoplastic elastomer block copolymer, a tackifying resin and an aromatic hydrocarbon resin, characterized in that the composition is cross-linkable and comprises (1) 20% to 40% of a thermoplastic elastomer block copolymer, (2) 40% to 60% of a hydrogenated hydrocarbon tackifying resin, (3) 10% to 30% of an aromatic hydrocarbon resin, (4) 10% to 20% of an unsaturated acid anhydride-modified polymer, and (5) 1% to 3% of a difunctional amine cross-linking agent.

2. The composition as claimed in claim 1 further characterized in that component (1) is a (styrene/ethylene)-(butylene/styrene) block copolymer.

3. The composition as claimed in claims 1 and 2, further characterized in that component (2) has a Ring and Ball softening point of 10°C to 120°C.

4. The composition as claimed in any of the preceding claims, further characterized in that component (3) has a Ring and Ball softening point of 140°C to 170°C.

5. The composition as claimed in any of the preceding claims, further characterized in that component (3) is selected from the group consisting of a polymer of alpha-methylstyrene, para-methylstyrene, vinyltoluene, styrene and mixtures thereof.

6. The composition as claimed in any of the preceding claims further characterized in that component (4) is maleic anhydride-modified polypropylene.

7. Use of the composition as claimed in any of the preceding claims as a hot melt sealant.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US-A-4 101 484 (R.C. DOSS)<br>* Column 1, line 53 - column 2, line 10; claim 1 *<br>--- | 1,2 | C 09 K   3/10<br>C 09 J 109/00<br>C 08 L   53/00 |
| A | EP-A-0 274 906 (MITSUBISHI)<br>* Column 2, lines 29-46; claim 1 *<br>--- | 1 | |
| A | EP-A-0 238 135 (SHELL)<br>* Claim 1 *<br>--- | 5 | |
| A | FR-A-2 043 362 (ARABOL EDWARSON)<br>* Claims 1-6 *<br>----- | 1,2 | |

TECHNICAL FIELDS SEARCHED (Int. Cl.5)

C 09 K
C 08 C
C 09 J

The present search report has been drawn up for all claims

| Place of search | Date of completion of the search | Examiner |
|---|---|---|
| THE HAGUE | 19-01-1990 | LEDER M. |

EPO FORM 1503 03.82 (P0401)